# EUROPEAN PATENT SPECIFICATION

(11) **EP 1 613 678 B1**
(45) Date of publication and mention of the grant of the patent: **27.07.2011**
(21) Application number: 04723221.0
(22) Date of filing: 25.03.2004
(51) Int. Cl.: C08G 18/38

(54) **NOVEL CHAIN EXTENDER USEFUL IN THE MANUFACTURE OF POLYURETHANES AND THE CORRESPONDING POLYURETHANES**
NEUES KETTENVERLÄNGERUNGSMITTEL ZUR VERWENDUNG BEI DER HERSTELLUNG VON POLYURETHANEN UND DIE ENTSPRECHENDEN POLYURETHANE
ALLONGEUR DE CHAINE UTILE DANS LA PRODUCTION DE POLYURETHANNES ET POLYURETHANNES CORRESPONDANTS

(30) Priority: 11.04.2003 EP 03008428
(43) Date of publication of application: 11.01.2006
(73) Proprietor: HUNTSMAN INTERNATIONAL LLC, Salt Lake City, Utah 84108 (US)
(72) Inventor: LINDSAY, Chris, Ian, B-3090 Overijse (BE); WOUTTERS, Steve, B-9120 Beveren (BE)
(74) Representative: Swinnen, Anne-Marie
(86) International application number: PCT/EP2004/050363
(87) International publication number: WO 2004/090009

(56) References cited:
- EP-A- 0 342 826
- EP-A- 1 213 619
- US-A- 3 244 713
- US-A- 3 328 321
- US-A- 3 384 624
- US-A- 4 757 094
- US-A- 5 153 261
- RANDALL D.; LEE S.: 'The polyurethanes book', 2002, JOHN WILEY & SONS, ISBN 0-470-85041-8 * pages 169,229 * * page 285 *
- OERTEL G.: 'Polyurethane Handbook', 1985, HANSER PUBLISHER, MUNICH, ISBN 3-446-13671-1 Table of contents
- WOODS G.: 'The ICI Polyurethanes Book', ICI POLYURETHANES AND JOHN WILEY & SONS, CHICHESTER, ISBN 0-471-92658-2 Table of contents

## Description

This invention relates to a novel chain extender which is a diamino-substituted heterocycle, and its use in the manufacture of polyurethanes (PUs), the PUs thus obtained, reactive compositions containing said chain extender, and processes for manufacturing PUs.

Thermoplastic polyurethanes (TPUs) are known and are used in many applications so far. However, there exist problems in their manufacture, their use and their final properties, especially in the balance of properties that up to now have been recognized as opposite one to the other.

Also known are supramolecular polymers, which are formed by H-bonding (or H-bridges) of polymers or oligomers. The skilled reader may revert to WO-A-9746607 and EP-A-1213309; "Reversible Polymers Formed from Self-Complementary Monomers Using Quadruple Hydrogen Bonding", by R.P. Sijbesma et al., Science, Vol. 278, 28 November 1997 "New Polymers Based on the Quadruple Hydrogen Bonding Motif", by Brigitte J.B. Folmer, pages 91-108, PhD Thesis, Technische Universiteit Eindhoven, 2000.

In the Ph.D thesis of Ronald F.M. Lange 1997 on "Multiple Hydrogen Bonding in Reversible Polymer Networks", a supramolecular polymer blend based on triple hydrogen bond formation between imide- and 2,4-diaminotriazine units is described. Maleimide-styrene and 2,4-diamino-6-vinyl-1,3,5-triarine-styrene blend compositions were prepared using the co-precipitation method. The copolymers had to be dissolved in a strong solvent and coagulated in water. A molecularly miscible polymer blend was obtained due to the hydrogen bond interactions between the copolymers.

In the Ph.D thesis of Felix H. Beijer 1998 on "Cooperative Multiple Hydrogen Bonding in Supramolecular Chemistry", 2,4-ureido-6-methyl-1,3,5-triazine dimers are described. The monomers were synthesized by reaction of 2,4-diamino-6-methyl-1,3,5-triazine with a monofunctional isocyanate. The crystal structure was determined via single crystal X-ray diffraction. A quadruply hydrogen bonded dimer was not observed because one of the intra-molecular hydrogen bonds was directed to the central nitrogen between the ureido substituents.

In the Ph.D thesis of Ky Hirschberg 2001 on "Supramolecular Polymers", the thermotropic liquid crystalline behaviour of disc-shaped ureidotriazine derivatives was studied (in reference to the above Felix H. Beijer work). The monomers were also synthesized by reaction of
2, 4-diamino-6-methyl-1, 3, 5-triazine with a monofunctional isocyanate.
However, none of the above documents teaches or suggests the instant invention.

### SUMMARY OF THE INVENTION

An object of this invention is therefore to provide an elastomeric polyurethane polymer having an hard block content of 5 to 60 %, and comprising the following monomers:
a) at least one isocyanate-reacting compound;
b) at least one polyisocyanate; and
c) at least one chain extender of the invention, as defined below, of formula I.

A further object of this invention is to provide a process for the preparation of the above polymer, comprising reacting the at least one isocyanate-reacting compound, the at least one polyisocyanate and the at least one chain extender of the formula I. Preferably, the process is solvent-free.

In one embodiment, the process comprises a pre-dissolution step of the at least one chain extender of formula I into the at least isocyanate-reacting compound.

In another embodiment, the process comprises the step of reacting the at least one chain extender of formula I in the form of a powder with the at least one isocyanate-reacting compound and the at least one polyisocyanate.

Still a further object of the invention is to provide a reactive mixture comprising the at least one isocyanate-reacting compound, the at least one polyisocyanate and the at least one chain extender of the formula I.

Still a further object of the invention is to provide a mixture comprising the at least one isocyanate-reacting compound and the at least one chain extender of the formula I.

Yet a further object of the invention is to provide the use as a chain extender in the manufacture of polyurethanes of a compound of the formula I.

### DETAILED DESCRIPTION OF THE INVENTION

Other objects, features and advantages will become more apparent after referring to the following specification

The invention is based on the use of a specific chain extender, which allows the final polyurethane to have the desired properties.

The chain extender used in the present invention is one of the formula I as follows: 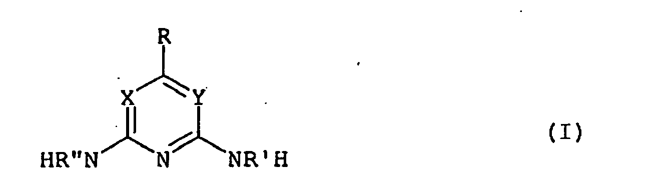 wherein:
X and Y both represent N;
R is hydrogen; hydroxyl; linear or branched C1-C36 alkyl, preferably C1-C24; linear or branched C2-C24 alkenyl; C3-C6 cycloalkyl; C10 aryl; aralkyl, alkaryl, polyether, perfluoroalkyl; or is -OR''', -C(O)R''', -CO(O)R''', -C(O)OR''' where R''' has the meaning of R; C1-C36, preferably C1-C20 oligooxyalkylene; perfuoroalkyl; and
R' and R" are each independently hydrogen or a C1-C6 alkyl.

In the above formula, aryl means an aromatic group, containing 5 to 10 carbon atoms. Examples are phenyl and naphthyl. This group may optionally be interrupted by one heteroatom which is O, N or S. Examples of such groups are thionyl, indenyl, furan, pyrrole, quinoline, isoquinoline, etc..

Alkylaryl is a group containing an alkyl group and an aryl group such as defined above, linked to the rest of the molecule by the aryl moiety.

Aralkyl is a group containing an alkyl group and an aryl group such as defined above, linked to the rest of the molecule by the alkyl moiety.

Perfluoroalkyl is an alkyl group as defined above, with all hydrogens substituted by fluorine.

Preferably, the chain extender of the invention is a 2,4-diamino-6-R-1,3,5-triazine, with R having the meaning as above.

A preferred alkenyl group is vinyl.

Preferably, both R' and R" are hydrogen.

Preferably, R is an alkyl group, especially with 1 or 2 to 30, preferably 18 carbon atoms, notably 1 or 2 to 12 carbon atoms; R is preferably linear.

The chain extender is generally available from the market, e.g. from Degussa. It may also be manufactured according to methods known in the art. For example, the process may involve reacting R-yl cyanide with dicyandiamide to yield the corresponding 2,4-diamino-6-R-1,3,5-triazine.

This chain extender is used in the manufacture of a polyurethane, from at least one isocyanate-reacting compound; at least one polyisocyanate; and at least one chain extender of the invention.

For example, the suitable organic polyisocyanates for use in the invention include any of those known in the art for the preparation of polyurethanes, and may be selected from aromatic, aliphatic, cycloaliphatic and araliphatic polyisocyanates.

In particular are used the aromatic polyisocyanates such as diphenylmethane diisocyanate in the form of its 2,4'-, 2,2'- and 4,4'- isomers and mixtures thereof, the mixtures of diphenylmethane diisocyanates (MDI) and oligomers thereof known in the art as "crude" or polymeric MIDI (polymethylene polyphenylene polyisocyanates) having an isocyanate functionality of greater than 2, although these are not preferred, toluene diisocyanate (TDI) in the form of its 2,4 and 2,6-isomers and mixtures thereof, 1,5-naphtalene diisocyanate and 1,4-diisocyanatobenzene (PPDI). Other organic polyisocyanates which may be mentioned include the aliphatic diisocyanates such as isophorone diisocyanate (IPDI), 1,6-diisocyanatohexane and 4,4'-diisocyanatodicyclo-hexylmethane (HMDI). Preferred are TDI or MDI, PPDI, IPDI, HMDI and other aliphatic isocyanates. Most preferred is MDI, especially 4,4'-MDI. Prepolymers can also be used. Mixtures may be used.

Suitable isocyanate-reactive compounds to be used in the invention include any of those known in the art for the preparation of polyurethanes. Of particular importance are polyols and polyol mixtures having average hydroxyl numbers of from 5 to 500, especially from 10 to 150 mg KOH/g, and hydroxyl functionalities of from 1.5 to 3, especially from 1.8 to 2.2, and a MW generally from 500 to 20,000, preferably 500 to 10,000. Mixtures may be used.

These polyols can be polyether polyols, polyester polyols, polyamides polyols, polyesteramides polyols, polythioether polyols, polycarbonate polyols, polyacetal polyols, polyolefin polyols, polysiloxane polyols, and the like. The isocyanate-reactive compound is preferably a polyol which is preferably a polyether or a polyester or mixtures thereof.

Polyether polyols, which may be used, include products obtained by the polymerization of alkylene oxides, for example ethylene oxide, propylene oxide, butylene oxide or tetrahydrofuran in the presence of polyfunctional initiators, said initiator containing generally from 2 to 3 active hydrogen atoms per molecule. Suitable initiator compounds contain a plurality of active hydrogen atoms and include water, butanediol, ethylene glycol, propylene glycol, diethylene glycol, triethylene glycol, dipropylene glycol, ethanolamine, diethanolamine, triethanolamine, toluene diamine, diethyl toluene diamine, phenylene diamine, toluene diamine, diphenylmethane diamine, ethylene diamine, cyclohexane diamine, cyclohexane dimethanol, resorcinol, bisphenol A, glycerol, trimethylolpropane, 1,2,6-hexanetriol, pentaerythritol sorbitol and sucrose. Mixtures of initiators and/or cyclic oxides may be used. Especially useful polyether polyols include polyoxypropylene diols and triols and poly(oxyethylene-oxypropylene) diols and triols obtained by the simultaneous or sequential addition of ethylene and propylene oxides to di- or trifunctional initiators as fully described in the prior art. Other particularly useful and preferred polyether polyols include polytetramethylene glycols obtained by the polymerization of tetrahydrofuran.

Polyester polyols which may be used include hydroxyl-terminated reaction products of polyhydric alcohols such as ethylene glycol, propylene glycol, diethylene glycol, 1,4-butanediol, neopentylglycol, 1,6-hexanediol, cyclohexane dimethanol, glycerol, trimethylolpropane, pentaerythritol or polyether polyols or mixtures of such polyhydric alcohols, and polycarboxylic acids, especially dicarboxylic acids or their ester-forming derivatives, for example succinic, glutaric and adipic acids or their dimethyl esters sebacic acid, phthalic anhydride, tetrachlorophthalic anhydride or dimethyl terephthalate or mixtures thereof. Polyesters obtained by the polymerization of lactones, for example caprolactone, in conjunction with a polyol, or of hydroxy carboxylic acids such as hydroxy caproic acid, may also be used.

Polyamide polyols, polyesteramide polyols, polythioether polyols, polycarbonate polyols, polyacetal polyols, polyolefin polyols, polysiloxane polyols, and the like are also known in the art. The skilled man may revert to the known publications, such as for example Polyurethanes Handbook 2nd edition, G. Oertel, 1994.

A further low molecular weight chain extender may be used, albeit this is not preferred. A classical chain extender is traditionally a low molecular weight polyol, typically a diol.

Other conventional ingredients (additives and/or auxiliaries) may be used in making the polyurethanes. These include catalysts, surfactants, flame proofing agents, fillers, pigments, stabilizers and the like.

As catalyst those may be used which enhance the formation of urethane and urea bonds like tin compounds, such as a tin salt of a carboxylic acid, e.g. dibutyltin dilaurate, stannous acetate and stannous octoate; amines, e.g. dimethylcyclohexylamine and triethylene diamine.

This PU chain is obtained by classical methods known in the art (see for example Polyurethanes Handbook 2nd edition, G. Oertel, 1994). The chains are notably obtained by the reaction of an isocyanate, an isocyanate-reactive compound (a polyol) and the chain extender of the invention.

This reaction can be a batch process or a continuous process. All reactants can be reacted at once, or can be reacted in a sequential manner. A prepolymer, known in the art, may also be used. It is also possible to first mix all or part of the chain extender of the invention with all or part of the isocyanate-reactive compound, and then to cause the remainder of the reactants to react together. By prior mixing of all or part the chain extender of the invention with all or part of the isocyanate-reactive compound solutions or suspensions or dispersions are obtained, depending on the chain extender and isocyanate-reactive compound used.

It is also possible to make use of the process involving reactive extrusion, reaction-injection moulding and generally speaking any batch or continuous process derived therefrom. For example, in one embodiment, the chain extender is prior mixed with the polyol (see above) and the thus-obtained solutions or suspensions or dispersions are used in the reactive extrusion process. For example, in another embodiment, the isocyanate and the polyol will be charged at one end of the extruding screw while the chain extender of the invention will be added at the same point or at a point downstream. In that embodiment, the chain extender is preferably in the form of a powder, the particle size of which will control the reaction rate. Using the particle size of the solid chain extender is a useful means to control the reaction rate, compared to heretofore known amine-based chain extenders (liquid), which are very reactive unless chemically protected.

In one embodiment, the solvent-free route is followed (where solvent is intended to mean any volatile organic compound in which the reaction products and/or mixture are dissolved but which is removed from the product subsequent to synthesis).

The quantities of the polyisocyanate compositions and the polyfunctional isocyanate-reactive compositions as well as those of the chain extender to be reacted will depend upon the nature of the polyurethane to be produced and will be readily determined by those skilled in the art. The isocyanate index can vary within broad limits, such as between 80 and 400, preferably between 95 and 105.

In a preferred embodiment, the amount (wt%) of the chain extender of the invention, based on the total weight, is comprised between 0.5 and 20wt%, preferably between 1 and 15wt%, most preferably 1 to 10wt%. Lower values such as from 1 to 5wt% are for soft PUs while higher values (above 5wt%) would be for harder PUs.

The polyurethane chain comprises from 5 to 60%, preferably 10 to 50%, most preferably 10 to 40% hard blocks, even more preferably 10 to 30%. Here we recall that the hard block content is typically defined as the ratio of (isocyanate plus chain extender reaction product) on total PU weight.

The polyurethane chain may have a molecular weight (MWn) ranging between large limits, as is known from the art.

The polyurethane polymer of the invention is useful in many aspects. The chain extender of the invention allows obtaining PUs having characteristics that have up to now not been reached. Especially, the PUs of the invention are generally thermoplastic, albeit the invention is not limited to this specific embodiment.

The chain extender of the invention opens up possibilities in many areas, such as coatings, films, adhesives, clothing, footwear, sealing and automotive application areas.

The invention is especially suitable for production of TPUs with high dynamic and elasticity requirements (i.e. the PU is elastomeric). The tensile hysteresis is very low, and the resilience is high. In another embodiment, the invention can produce TPUs with low hardness, but good physical properties. The invention allows obtaining TPUs with low Shore A hardness values. In yet a further embodiment, the invention can be applied to medium to high hardness TPUs with good dynamic performance and improved heat stability. Foams may also be produced thanks to the invention; especially foamed films can be obtained.

The invention also provides for cross-linked elastomeric PU (where cross-linking can be obtained by using trifunctional components).

The instant PUs are generally not foamed. Optionally foamed PUs can be produced, their density being normally in the range 100-1000kg/m³, preferably 300-900kg/m³. The foaming can be achieved in-situ during synthesis or preferably via a post-processing step.

It should also be pointed out that the chain extender of the invention also provides additional benefits in terms of health and toxicity requirements, since it is not toxic, in contrast with aromatic amines known up to now. Also, compared to aliphatic diamine chain extender, the production is enhanced, thanks to a different reactivity.

The following examples illustrate the invention without limiting it.

### EXAMPLES

### Example 1.

A calculated amount of 2,4-diamino-6-nonyl-1,3,5-triazine (obtained from Degussa) was dissolved in a calculated amount of polyester polyol which is a two-functional ethyleneglycol-1,4-butanediol adipate with a numerical mole weight of 2200 g/mole (obtained from Huntsman) by heating this mixture to 110-120°C under continuous stirring. A masterblend of chain extender dissolved in polyol is obtained. A calculated amount of this masterblend, at a temperature of 50-60°C, is weighed in a cardboard cup of 425cm³, then a calculated amount of diphenylmethane-4,4'-diisocyanate is added. Eventually the catalyst Metatin® S26 (from Rohm and Haas) or Dabco® S (from Air Products) is added. All reagents are mixed in a vacuum mixer at a speed of 1500rpm for 20-30 seconds. The mixed and degassed blend is poured onto a teflon-coated metal pan, heated to approximately 80°C by a hot plate set at 140°C. The reaction mixture is allowed to cure for 1 hour on the hot plate, and 16 hours in an oven at 80°C

Reference materials were made according to the same procedure except that in the initial step the polyester polyol was mixed with a calculated quantity of 1,4-butanediol chain extender instead of the triazine chain extender of the invention.

A range of TPUs in the Shore A Hardness range 60-80 were prepared by systematic variation of the proportion of the chain extender in the formulation (from 2 to 5wt%). Typically, the triazine chain extender based TPUs showed improved ball rebound (10% higher) and tensile hysteresis (30% lower) performance compared to reference materials of the same hardness based on 1,4-butanediol chain extender.

### Example 2.

A series of materials was made using the same procedure as described in Example 1, with the exception that the polyol component was poly-tetrahydrofuran (obtained from DuPont) with a functionality of 2 and a numerical molecular weight of 1000 (p-THF1000) or 2000 (p-THF2000). In the case of pTHF-1000 the polyol/chain extender solution was cured with diphenylenemethane-4,4'-diisocyanate whereas the pTHF-2000/chain extender solution was cured with a prepolymer (33.3 wt/wt% p-THF 2000 / 66.6 wt/wt% diphenylenemethane-4,4'-diisocyanate, made by stirring the reagents for two hours at 80°C under a nitrogen blanket).

Reference materials were made using 1,4-butanediol and 4,4'-bis(2-hydroxyethyl)quinone (HQEE) as chain extenders.

A range of materials in the Shore A Hardness range 50-75 was prepared by systematic variation of the quantity of chain extender in the formulation (from 2 to 4wt%). The triazine chain extender based TPUs showed improved ball rebound (10-20% higher) and tensile hysteresis (30-40% lower) compared to TPUs of similar hardness based on 1,4-butanediol or HQEE.

### Example 3.

A calculated amount of 2,4-diamino-6-nonyl-1,3,5-triazine (obtained from Degussa) was dissolved in a calculated amount of polyester polyol which is a two-functional ethyleneglycol-1,4-butanediol adipate with a numerical mole weight of 2200 g/mole (obtained from Huntsman) by heating this mixture to 110-120°C under continuous stirring. A masterblend of chain extender dissolved in polyol is obtained. A calculated amount of this masterblend, at a temperature of 50-60°C, is weighed in a cardboard cup of 425cm³, then a calculated amount of diphenylmethane-4,4'-diisocyanate is added. Eventually the catalyst Metatin® S26 (from Rohm and Haas) or Dabco® S (from Air Products) is added. All reagents are mixed in a vacuum mixer at a speed of 1500rpm for 20-30 seconds. The mixed and degassed blend is poured onto a teflon-coated metal pan, heated to approximately 80°C by a hot plate set at 140°C. The reaction mixture is allowed to cure for 1 hour on the hot plate, and 16 hours in an oven at 80°C. The additives package (Irganox® and Irgafos® both from Ciba) is dissolved in the polyol using the same procedure. After homogenization by stirring for few minutes, a masterblend of chain extender/additives package dissolved in the polyol is obtained. A calculated amount of this masterblend, at a temperature of 60°C, is weighed into a 20L pail. Stirring is started. The catalyst (Sn(II)octoate) as a 20wt/wt% solution in ethoxyethylacetate is added and mixed in. Eventually a calculated amount of diphenylmethane-4,4'-diisocyanate is added. This reaction mixture is stirred for another 45 seconds and poured in a tray. The reaction-exotherm is measured with a thermocouple for about 15 minutes. The tray is put in an oven and allowed to cure for 16h at 80°C. The TPU is allowed to cool down and is granulated at ambient temperature. Films are extruded and test parts are injection-moulded, both at a temperature of 155°C.

A range of materials was prepared by systematic variation of the quantity of chain extender in the formulation (from 2 to 3wt%).

The results are the following: Shore A hardness values range from 59 to 64; residual strain after elongation at 200% is below 3.4%; the hysteresis is very low; the resilience is from 64 to 68%.

## Claims

1. An elastomeric polyurethane polymer having an hard block content in the range of 5 to 60%, and comprising the following monomers:
a) at least one isocyanate-reacting compound;
b) at least one polyisocyanate; and
c) at least one chain extender of the formula I 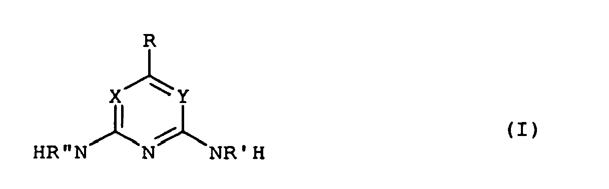 wherein:
X and Y both represent nitrogen;
R is hydrogen, hydroxyl, linear or branched C1-C36 alkyl, linear or branched C2-C24 alkenyl, C3-C6 cycloalkyl, C10 aryl, aralkyl, alkaryl, polyether, perfluoroalkyl, or is - OR''', -C(O)R''', -CO(O)R''', -C(O)OR''' where R''' has the meaning of R, C1-C36 oligooxyalkylene, perfuoroalkyl; and
R' and R" are each independently hydrogen or C1-C6 alkyl.

2. The polyurethane polymer of claim 1 which is thermoplastic.

3. The polyurethane polymer of claim 1 or 2, wherein the hard block content is in the range 10 to 30%.

4. The polyurethane polymer of any one of claims 1 to 3, in which in the chain extender, both R' and R" are hydrogen.

5. The polyurethane polymer of any one of claims 1 to 4, in which in the chain extender, R is a linear C1-C30 or C2-C30 alkyl group.

6. The polyurethane polymer of any one of claims 1 to 5, in which the isocyanate-reacting compound is a polyether polyol.

7. The polyurethane polymer of any one of claims 1 to 6, in which the isocyanate-reacting compound is a polyester polyol.

8. The polyurethane polymer of any one of claims 1 to 7, in which the isocyanate is selected from aromatic, aliphatic, cycloaliphatic and araliphatic polyisocyanates.

9. The polyurethane polymer of any one of claims 1 to 8, having a weight content of chain extender in the range of 0.5 to 20 wt%, preferably 1 to 15 wt%, most preferably 1 to 10 wt%, even more preferably 1 to 5 wt%.

10. Process for manufacturing a polyurethane polymer of any one of claims 1 to 9, comprising reacting the at least one isocyanate-reacting compound, the at least one polyisocyanate and the at least one chain extender of the formula I.

11. The process of claim 10, which is solvent-free.

12. The process of claim 10 or 11, which comprises a pre-dissolution step of the at least one chain extender of formula I into the at least one isocyanate-reacting compound.

13. The process of claim 10 or 11, which comprises the step of reacting the at least one chain extender of formula I in the form of a powder with the at least one isocyanate-reacting compound and the at least one polyisocyanate.

14. The process of any one of claims 10 to 13, which comprises reactive extrusion.

15. A reactive mixture comprising the at least one isocyanate-reacting compound, the at least one polyisocyanate and the at least one chain extender of the formula I, as defined in any one of claims 1 to 9.

16. A mixture comprising the at least one isocyanate-reacting compound and the at least one chain extender of the formula I, as defined in any one of claims 1 to 9.

## Patentansprüche

1. Elastomeres Polyurethanpolymer, das einen Gehalt an hartem Block im Bereich von 5 bis 60 % hat und die folgenden Monomere umfasst:
a) wenigstens eine mit Isocyanat reagierende Verbindung;
b) wenigstens ein Polyisocyanat und
c) wenigstens ein Kettenverlängerungsmittel der Formel I 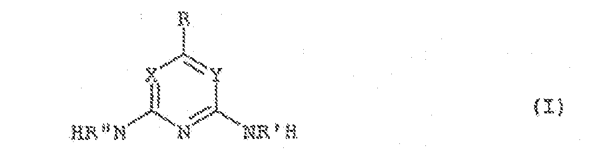 worin:
X und Y beide Stickstoff darstellen;
R Wasserstoff, Hydroxyl, lineares oder verzweigtes C1-C36-Alkyl, lineares oder verzweigtes C2-C24-Alkenyl, C3-C6-Cycloalkyl, C10-Aryl, Aralkyl, Alkaryl, Polyether, Perfluoralkyl ist oder -OR"', -C(O)R"', -CO(O)R"', -C(O)OR"' ist, worin R"' die Bedeutung von R, C1-C36-Oligooxyalkylen, Perfluoralkyl hat, und
R' und R" jeweils unabhängig Wasserstoff oder C1-C6-Alkyl sind.

2. Polyurethanpolymer nach Anspruch 1, das thermoplastisch ist.

3. Polyurethanpolymer nach Anspruch 1 oder 2, wobei der Gehalt an hartem Block im Bereich von 10 bis 30 % ist.

4. Polyurethanpolymer nach einem der Ansprüche 1 bis 3, wobei in dem Kettenverlängerungsmittel beide, R' und R", Wasserstoff sind.

5. Polyurethanpolymer nach einem der Ansprüche 1 bis 4, wobei in dem Kettenextender R eine lineare C1-C30- oder C2-C30-Alkylgruppe ist.

6. Polyurethanpolymer nach einem der Ansprüche 1 bis 5, wobei die mit Isocyanat reagierende Verbindung ein Polyetherpolyol ist.

7. Polyurethanpolymer nach einem der Ansprüche 1 bis 6, wobei die mit Isocyanat reagierende Verbindung ein Polyesterpolyol ist.

8. Polyurethanpolymer nach einem der Ansprüche 1 bis 7, wobei das Isocyanat aus aromatischen, aliphatischen, cycloaliphatischen und araliphatischen Polyisocyanaten ausgewählt ist.

9. Polyurethanpolymer nach einem der Ansprüche 1 bis 8, das einen Gewichtsgehalt an Kettenverlängerungsmittel im Bereich von 0,5 bis 20 Gewichts-%, vorzugsweise 1 bis 15 Gewichts-%, am bevorzugtesten 1 bis 10 Gewichts-%, noch bevorzugter 1 bis 5 Gewichts-%, hat.

10. Verfahren zur Herstellung eines Polyurethanpolymers nach einem der Ansprüche 1 bis 9, umfassend Umsetzen der wenigstens einen mit Isocyanat reagierenden Verbindung, des wenigstens einen Polyisocyanats und des wenigstens einen Kettenverlängerungsmittels der Formel I.

11. Verfahren nach Anspruch 10, das lösungsmittelfrei ist.

12. Verfahren nach Anspruch 10 oder 11, das einen Vorlösungsschritt des wenigstens einen Kettenverlängerungsmittels der Formel I in der wenigstens einen mit Isocyanat reagierenden Verbindung umfasst.

13. Verfahren nach Anspruch 10 oder 11, das den Schritt des Umsetzens des wenigstens einen Kettenverlängerungsmittels der Formel I in der Form eines Pulvers mit der wenigstens einen mit Isocyanat reagierenden Verbindung und dem wenigstens einen Polyisocyanat umfasst.

14. Verfahren nach einem der Ansprüche 10 bis 13, das reaktives Extrudieren umfasst.

15. Reaktives Gemisch, das die wenigstens eine mit Isocyanat reagierende Verbindung, das wenigstens eine Polyisocyanat und das wenigstens eine Kettenverlängerungsmittel der Formel I, wie in einem der Ansprüche 1 bis 9 definiert, umfasst.

16. Gemisch, das die wenigstens eine mit Isocyanat reagierende Verbindung und dsd wenigstens eine Kettenverlängerungsmittel der Formel I, wie in einem der Ansprüche 1 bis 9 definiert, umfasst.

## Revendications

1. Polymère du type polyuréthanne élastomère, ayant une teneur en blocs durs comprise dans l'intervalle de 5 à 60 %, et comprenant les monomères suivantes :
a) au moins un composé réagissant avec les isocyanates ;
b) au moins un polyisocyanate ; et
c) au moins un agent d'allongement de chaîne de formule I 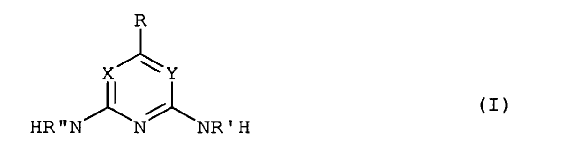 dans laquelle :
X et Y représentent l'un et l'autre un atome d'azote ;
R représente un atome d'hydrogène, un groupe hydroxyle, alkyle en C₁ à C₃₆ linéaire ou ramifié, alcényle en C₂ à C₂₄ linéaire ou ramifié, cycloalkyle en C₃ à C₆, aryle en C₁₀, aralkyle, alcaryle, polyéther ou perfluoralkyle, ou bien représente un groupe -OR"', -C(O)R"', -CO(O)R"', -C(O)OR"', dans lequel R'" représente R, un groupe oligooxyalkylène en C₁ à C₃₆ ou un groupe perfluoralkyle ; et
R' et R" représentent chacun indépendamment un atome d'hydrogène ou un groupe alkyle en C₁ à C₆.

2. Polymère du type polyuréthanne suivant la revendication 1, qui est thermoplastique.

3. Polymère du type polyuréthanne suivant la revendication 1 ou 2, dans lequel la teneur en blocs durs est comprise dans l'intervalle de 10 à 30 %.

4. Polymère du type polyuréthanne suivant l'une quelconque des revendications 1 à 3, dans lequel, dans l'agent d'allongement de chaîne, R' et R" représentent l'un et l'autre un atome d'hydrogène.

5. Polymère du type polyuréthanne suivant l'une quelconque des revendications 1 à 4, dans lequel, dans l'agent d'allongement de chaîne, R représente un groupe alkyle linéaire en C₁ à C₃₀ ou C₂ à C₃₀.

6. Polymère du type polyuréthanne suivant l'une quelconque des revendications 1 à 5, dans lequel le composé réagissant avec les isocyanates est un polyétherpolyol.

7. Polymère du type polyuréthanne suivant l'une quelconque des revendications 1 à 6, dans lequel le composé réagissant avec les isocyanates est un polyesterpolyol.

8. Polymère du type polyuréthanne suivant l'une quelconque des revendications 1 à 7, dans lequel l'isocyanate est choisi parmi des polyisocyanates aromatiques, aliphatiques, cycloaliphatiques et araliphatiques.

9. Polymère du type polyuréthanne suivant l'une quelconque des revendications 1 à 8, ayant une teneur, en poids, en agent d'allongement de chaîne, comprise dans l'intervalle de 0,5 à 20 % en poids, avantageusement de 1 à 15 % en poids, mieux encore de 1 à 10 % en poids, encore plus avantageusement de 1 à 5 % en poids..

10. Procédé pour la production d'un polymère du type polyuréthanne suivant l'une quelconque des revendications 1 à 9, comprenant la réaction dudit au moins un composé réagissant avec les isocyanates, dudit au moins un polyisocyanate et dudit au moins un agent d'allongement de chaîne de formule I.

11. Procédé suivant la revendication 10, qui est dépourvu de solvant.

12. Procédé suivant la revendication 10 ou 11, qui comprend une étape de prédissolution dudit au moins un agent d'allongement de chaîne de formule I dans ledit au moins un composé réagissant avec les isocyanates.

13. Procédé suivant la revendication 10 ou 11, qui comprend l'étape de réaction dudit au moins un agent d'allongement de chaîne de formule I sous forme de poudre avec ledit au moins un composé réagissant avec les isocyanates et ledit au moins un polyisocyanate.

14. Procédé suivant l'une quelconque des revendications 10 ou 13, qui comprend une extrusion réactive.

15. Mélange réactif comprenant ledit au moins un composé réagissant avec les isocyanates, ledit au moins un polyisocyanate et ledit au moins un agent d'allongement de chaîne de formule I, tels que définis dans l'une quelconque des revendications 1 à 9.

16. Mélange réactif comprenant ledit au moins un composé réagissant avec les isocyanates et ledit au moins un agent d'allongement de chaîne de formule I, tels que définis dans l'une quelconque des revendications 1 à 9.
